# EUROPÄISCHE PATENTANMELDUNG

(11) **EP 1 174 609 A2**
(43) Veröffentlichungstag der Anmeldung: **23.01.2002**
(21) Anmeldenummer: 01113480.6
(22) Anmeldetag: 02.06.2001
(51) Int. Cl.: F02D 19/12

(54) **Kraftfahrzeug mit einer Brennkraftmaschine mit Direkteinspritzung des Kraftstoffs und mit einer Additivzuführungsvorrichtung**

(30) Priorität: 22.07.2000 DE 10035766
(71) Anmelder: Bayerische Motoren Werke Aktiengesellschaft, 80809 München (DE)
(72) Erfinder: Henkel-Adam, Franz, 81375 München (DE)

(57) **Zusammenfassung**

Die Erfindung betrifft ein Kraftfahrzeug mit einer Brennkraftmaschine 1 mit Direkteinspritzung des Kraftstoffs und einer steuerbaren Additivzuführungsvorrichtung 2, wobei die Additivzuführungsvorrichtung 2 an eine zu den Zylindern 6 der Brennkraftmaschine 1 führende Luftzuführungsvorrichtung angeschlossen ist und von einer Steuervorrichtung in Abhängigkeit von dem jeweiligen Betriebszustand der Brennkraftmaschine 1 gesteuert ist. Die Zuführung des Additivs in die Verbrennungskammer erfolgt nicht zusammen mit dem ebenfalls flüssigen Kraftstoff, sondern über die Ansaugluft der Brennkraftmaschine 1. Die Verwendung von Aktoren 3, die nach dem Drop On Demand-Verfahren arbeiten und die von einem Steuergerät 15 gesteuert werden, erlaubt eine präzise bedarfsgerechte Dosierung des Kraftstoff-Additivs.

## Beschreibung

Die Erfindung betrifft ein Kraftfahrzeug mit einer Brennkraftmaschine mit Direkteinspritzung des Kraftstoffs und mit einer Additivzuführungsvorrichtung.

Der Verbrennungsvorgang von Kraftstoff und Luft in den Verbrennungskammern von Brennkraftmaschinen wird häufig durch die Beimischung von flüssigen Kraftstoffzusätzen (Additive) unterstützt, die üblicherweise außerhalb der Verbrennungskammern mit dem flüssigen Kraftstoff vermischt werden. Bei Viertakt-Brennkraftmaschinen sorgt eine Additivbeimischung z.B. für eine geringere mechanische Beanspruchung der Ein- und Auslassventile, so dass eine Verlängerung der Lebensdauer der Brennkraftmaschine erreicht wird. Eine Additivbeimischung zum Kraftstoff kann auch die Klopffestigkeit des mit dem Additiv versetzten Kraftstoffs erhöhen, so dass die entsprechende Brennkraftmaschine mit einem größeren Verdichtungsverhältnis konzipiert werden kann und somit eine größere Motorleistung bereitgestellt werden kann. Bei Dieselkraftstoff können Additive für eine vollständigere Verbrennung des Dieselkraftstoffs in den Brennkammern sorgen, so dass zum einen die Menge an Ruß, die in den Brennkammern abgelagert wird, und zum anderen die Emission von umweltschädlichen Abgasen reduziert werden können. Bei Betrieb eines Dieselmotors mit Partikelfilter kann durch den Einsatz von Additiven die Abrennungstemperatur von Ruß deutlich reduziert werden.
Die Beimischung von Additiven für den Verbrennungsvorgang erfolgt gemäß dem Stand der Technik vorab direkt in den flüssigen Kraftstoff. Im einfachsten Fall wird das Additiv beim Betanken mit dem im Kraftstoff-Tank befindlichen Kraftstoff vermischt. Eine weitere Möglichkeit der Additivzuführung ist bei Brennkraftmaschinen mit Direkteinspritzung des Kraftstoffs bekannt, bei denen die Additivbeimischung zu dem Kraftstoff auch in der Vor- bzw. Rücklaufleitung der Einspritzvorrichtung erfolgen kann.
Das geeignete Mischungsverhältnis zwischen den Mengen an Additiv und Kraftstoff, welches für einen optimierten Betrieb der Brennkraftmaschine erforderlich ist, kann bei diesen Verfahren zur Additivbeimischung nur sehr ungenau eingestellt werden. Im Falle der Beimischung von Additiven zu dem im Kraftstoff-Tank befindlichen Kraftstoff wäre beim Nachtanken eine genaue Kenntnis über die in den Kraftstoff-Tank eingefüllte Kraftstoffmenge erforderlich, um die für ein geeignetes Mischungsverhältnis zwischen Additiv und Kraftstoff erforderliche Menge des dem Kraftstoff zuzuführenden Additivs bestimmen zu können. Ein weiteres Problem bei diesem Verfahren stellt die geringe Homogenität der Mischung zwischen dem flüssigen Additiv und dem flüssigen Kraftstoff dar. Hiermit ergibt sich selbst bei genauer Kenntnis der Menge des zuzuführenden Additivs im Verlauf der Verbrennung einer Tankfüllung ein (um den gewünschten Wert) stark schwankendes Mischungsverhältnis.
Mithilfe der in der US 5,421,295 offenbarten Vorrichtung kann beim Nachtanken das Mischungsverhältnis zwischen Additiv und Kraftstoff ungefähr konstant gehalten werden. Dies wird erreicht, indem während des Betankens der zunehmende Pegelstand im Kraftstoff-Tank mit einer Pegelmessvorrichtung gemessen wird. Ein mit dem Kraftfahrzeug mitgeführter Mikrocomputer berechnet aus dem veränderten Pegelstand die Nachtankmenge an Kraftstoff und die Menge an zuzuführendem Additiv. Die für das gewünschte Mischungsverhältnis erforderliche Menge an flüssigem Additiv, welches sich in einem Zusatztank befindet, wird dann dem im Kraftstoff-Tank befindlichen Kraftstoff zugeführt. Dieses Zuführen erfolgt über eine feine Düse, so dass das Additiv in Form von feinen Tröpfchen in dem Kraftstoff verteilt wird und somit eine relativ homogene Vermischung zwischen dem flüssigen Additiv und dem flüssigen Kraftstoff im Kraftstoff-Tank erzielt wird.

Aus dem oben beschriebenen Stand der Technik ergibt sich eine Reihe von Problemen. So bleibt z.B. bei optimaler Vermischung zwischen Additiv und Kraftstoff ein einmal eingestelltes Mischungsverhältnis im Verlauf des Verbrauchs einer Tankfüllung erhalten und kann nicht an den aktuellen Betriebszustand der Brennkraftmaschine angepasst werden. Ein weiteres Problem ergibt sich, falls Kraftstoff und Additiv unterschiedliche Massendichten aufweisen. In diesem Fall erhält man bei einer zunächst homogenen Vermischung zwischen Additiv und Kraftstoff eine mit der Zeit zunehmende ungleichmäßige Verteilung des flüssigen Additivs im Kraftstoff. Falls das Additiv gegenüber dem Kraftstoff eine größere (kleinere) Massendichte aufweist, ergibt sich mit Beginn des Verbrauchs einer Tankfüllung am Boden des Kraftstoff-Tanks zunächst eine größere (kleinere) Konzentration an Additiv. In der Verbrennungskammer führt dies zu einem im Verlauf des Verbrauchs einer Tankfüllung stark schwankenden Mischungsverhältnis zwischen Additiv und Kraftstoff, welches zu Beginn des Verbrauchs einer Tankfüllung eine hohen (niedrigen) und am Ende des Verbrauchs einer Tankfüllung einen niedrigen (hohen) Anteil an Additiv aufweist. Dies könnte nur durch den Einsatz einer relativ aufwendigen Rührvorrichtung verhindert werden.

Es ist eine Aufgabe der Erfindung, ein Kraftfahrzeug mit Kraftstoff-Direkteinspritzung und mit einer Additivzuführungsvorrichtung zu schaffen, mit welcher das vom momentanen Betriebszustand der Brennkraftmaschine abhängige geeignete Mischungsverhältnis zwischen Additiv und Kraftstoff zu jedem Zeitpunkt genau eingestellt werden kann und mit welcher eine sehr homogene Vermischung von Additiv und Kraftstoff in der Verbrennungskammer der Brennkraftmaschine über die gesamte Betriebszeit des Fahrzeugs hinweg sichergestellt wird.

Hierzu ist erfindungsgemäß ein Kraftfahrzeug mit einer Brennkraftmaschine mit Direkteinspritzung des Kraftstoffs, und mit einer Additivzuführungsvorrichtung vorgesehen, welche an eine zu den Zylindern der Brennkraftmaschine führenden Luftzuführungsvorrichtung angeschlossen ist und welche von einer Steuervorrichtung in Abhängigkeit von dem jeweiligen Betriebszustand der Brennkraftmaschine gesteuert ist.
Das Additiv wird erfindungsgemäß somit nicht mit dem flüssigen Kraftstoff, sondern gemäß dem Betriebszustand der Brennkraftmaschine mit der gasförmigen Ansaugluft der Brennkraftmaschine vermischt. Das Zuführen des Additivs zur Ansaugluft bewirkt beim Einströmen in die Verbrennungskammer der Brennkraftmaschine aufgrund von Verwirbelungen des Gemisches aus Ansaugluft und Additiv eine sehr homogene Vermischung zwischen der Ansaugluft und dem Additiv.
Vorteilhafte Weiterbildungen der Erfindung sind in den abhängigen Patentansprüchen beschrieben.
Gemäß einer Ausführungsform der Erfindung erfolgt die Steuerung der Additivzuführungsvorrichtung in Abhängigkeit von der Kraftstoff-Einspritzmenge. Diese Steuerung ist vorteilhaft, weil die zugeführte Menge an Additiv vor allem an die zugeführte Kraftstoffmenge anzupassen ist, so dass eine direkte Abhängigkeit besteht, ohne dass zusätzliche Berechnungsschritte erforderlich sind. Es kann somit z.B. einfach die zugeführte Kraftstoffmenge gemessen und daraus die zuzuführende Additivmenge berechnet werden.
Gemäß einer anderen Ausführungsform der Erfindung wird die die Additivzuführungsvorrichtung steuernde Steuervorrichtung ihrerseits mittels eines elektronischen Motorsteuergeräts in Abhängigkeit von den Einspritz-Kennfelddaten gesteuert, so dass sich eine gegenüber dem Gegenstand des Anspruchs 2 verbesserte, d.h. für den Verbrennungsvorgang weiter optimierte Additivbeimischung erzielen lässt. Das elektronische Motorsteuergerät wird im Folgenden auch als Motorelektronik bezeichnet.
In einer weiteren bevorzugten Ausführungsform der Erfindung weist die Additivzuführungsvorrichtung mindestens einen auf den Drop On Demand-Verfahren beruhenden gesteuerten Aktor und eine dem Aktor vorgeschaltete Förderpumpe auf. Die für die Erfindung verwendeten Aktoren wandeln elektrische Signale in mechanische Bewegungen um, so dass die Ansaugluft von einem zuvor bereitgestellten Additiv mit einer genau dosierten Menge dieses Additivs versetzt wird. Da derartige Aktoren bei handelsüblichen Tintenstrahldruckern weitverbreitet zum Einsatz kommen, kann die erfindungsgemäße Additivzuführungsvorrichtung preiswert realisiert werden.

Ferner kann nach einer weiteren Ausführungsform der Erfindung die Luftzuführungsvorrichtung für jeden Zylinder der Brennkraftmaschine ein Luftansaugrohr aufweisen, an das eine steuerbare Additivzuführungsvorrichtung angeschlossen ist. Dies hat den Vorteil, dass die Additivzuführung für jeden Zylinder der Brennkraftmaschine individuell gesteuert werden kann und somit eine weiter verbesserte, d.h. für den Verbrennungsvorgang in jedem einzelnen Zylinder optimierte Additivbeimischung erzielen lässt.

In einer weiteren erfindungsgemäßen Fortentwicklung weist jeder Aktor mehrere einzeln ansteuerbare Düsenöffnungen auf, so dass eine besonders genaue Dosierung des Kraftstoff-Additivs erzielt werden kann.

Die Erfindung ist insbesondere für Kraftfahrzeuge mit Dieselmotor vorgesehen, bei denen nunmehr gezielt Klopfgeräusche und die damit verbundenen Nachteile vermieden werden können.

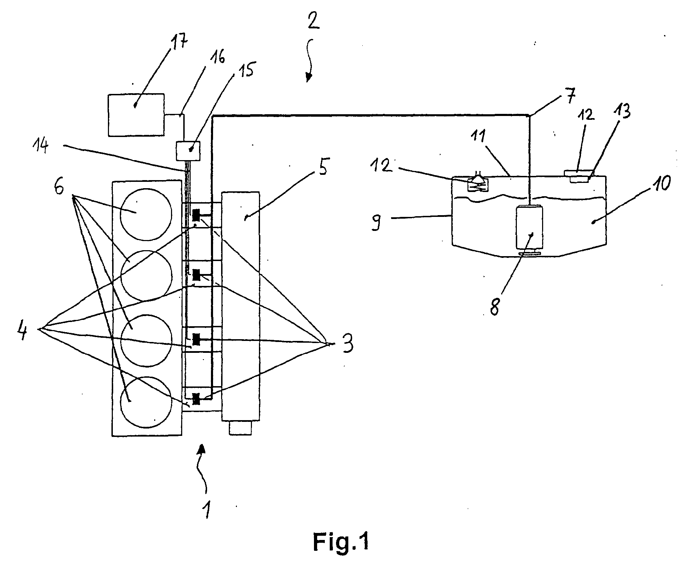

Die Erfindung wird im Folgenden anhand eines bevorzugten Ausführungsbeispiels mit Bezugnahme auf die Zeichnung erläutert. In der Zeichnung zeigt Fig.1 in schematischer Form eine Brennkraftmaschine eines Kraftfahrzeugs mit einer Vorrichtung zur bedarfsgesteuerten Beimischung von Kraftstoff-Additiven in die Ansaugluft der Kraftfahrzeug-Brennkraftmaschine gemäß einer Ausführungsform der Erfindung.

Fig.1 zeigt eine Vierzylinder-Brennkraftmaschine 1 mit Direkteinspritzung. Die Brennkraftmaschine 1 ist Teil eines nicht dargestellten Kraftfahrzeugs. Aus Gründen der Übersichtlichkeit sind in Fig.1 alle Elemente weggelassen, die der Zuführung des Kraftstoffs in die Verbrennungsräume und der Abführung der Abgase aus den Verbrennungsräumen der Brennkraftmaschine 1 dienen.
An die Brennkraftmaschine 1 ist eine Additivzuführungsvorrichtung 2 angeschlossen. Die Additivzuführungsvorrichtung 2 weist vier Aktoren 3 auf, die jeweils an einem zylinderspezifischen Luftansaugrohr 4 angeordnet sind. Die zylinderspezifischen Luftansaugrohre 4 befinden sich zwischen dem Luftansaugkrümmer 5 und den Zylindern 6 der Brennkraftmaschine 1.
Die Aktoren 3 sind ferner an eine Förderleitung 7 angeschlossen. Die Förderleitung 7 ist mit einer Förderpumpe 8 verbunden, die in einem Zusatzbehälter 9 angeordnet ist. Der Zusatzbehälter 9 nimmt das der Ansaugluft zuzuführende, flüssige Additiv 10 auf. Der Zusatzbehälter 9 ist ein allseitig geschlossener Behälter und weist in seiner oberen Wand 11 ein druckgesteuertes Belüftungsventil 12 und einen Einfüllstutzen 13 auf. Der Einfüllstutzen 13 ist während des gewöhnlichen Betriebes der Brennkraftmaschine 1 mit einer Abdeckkappe 13 verschlossen.
Die Aktoren 3 sind über elektrische Steuerleitungen 14 mit einem elektronischen Steuergerät 15 gekoppelt. Das Steuergerät 15 ist über eine Steuerleitung 16 mit einem elektronischen Motorsteuergerät 17 (Motorelektronik) verbunden. Die Aktoren 3 weisen eine Mehrzahl von bis zu 100 Düsenöffnungen auf, die individuell ansteuerbar sind, wodurch eine präzise Dosierung des Additivs 10 bis hin zu einer Beimischung in dem ppm-Bereich erreicht werden kann. Eine Additivbeimischung mit einem ppm bedeutet, dass ein Masseteil Additiv mit einer Million Masseteilen Luft vermischt wird.
An dieser Stelle sei darauf hingewiesen, dass anstelle eines reinen Additivs auch ein Gemisch aus Additiv und Kraftstoff verwendet werden kann. Dadurch wird der Volumenanteil an Additiv der zur Ansaugluft zugeführten Flüssigkeit reduziert und es ergibt sich die Möglichkeit, die Menge des für den Verbrennungsvorgang verwendeten Additivs noch feiner zu dosieren. Auf diesen Gesichtspunkt der Erfindung wird in der weiteren Beschreibung nicht mehr eingegangen. Der Begriff Additiv bezeichnet im Folgenden ein reines Kraftstoffadditiv oder ein Gemisch aus Additiv und Kraftstoff.

Im Folgenden wird die erfindungsgemäße Additivbeimischung in die Ansaugluft der Brennkraftmaschine 1 erläutert. Mithilfe der Förderpumpe 8 wird das flüssige Additiv 10, welches sich in dem Zusatzbehälter 9 befindet, über die Förderleitung 7 zu den Aktoren 3 befördert. Die Aktoren 3 arbeiten nach einem Drop-On-Demand-Verfahren. Bei diesem Verfahren wird in einem kleinen Hohlraum eines Aktors 3 ein Flüssigkeitstropfen bereitgestellt, der zu einem bestimmten Zeitpunkt durch ein an den Aktor 3 angelegtes elektrisches Auslösesignal von diesem weggeschleudert und somit der Ansaugluft der Brennkraftmaschine zugeführt wird. Solche Verfahren, wie z.B. das piezoelektrische oder das Bubble-Jet Verfahren kommen bei handelsüblichen Tintenstrahldruckern zum Einsatz. Die Verwendung von mehreren Aktoren 3, wobei für jedes zylinderspezifische Luftansaugrohr 4 der Brennkraftmaschine 1 ein eigener Aktor 3 vorgesehen ist, ermöglicht eine zylinderorientierte Additivbeimischung, d.h. die Beimischung erfolgt für jeden Zylinder individuell zum geeigneten Zeitpunkt und mit der passenden Menge an Additiv.
Die von dem Steuergerät 15 erzeugten Auslösesignale werden über Steuerleitungen 14 an die Aktoren 3 angelegt. Die Kopplung des Steuergerätes 15 mit der Motorelektronik 17 erfolgt über eine weitere Steuerleitung 16, so dass als Bestimmungsgröße für die Menge des zuzuführenden Additivs 10 die von der Motorelektronik 17 bereitgestellten Einspritz-Kennfelddaten herangezogen werden können. Auf diese Weise kann individuell für jeden Zylinder 6 die Menge des zuzuführenden Additivs 10 bedarfsgerecht an den momentanen Betriebszustand der Brennkraftmaschine 1 angepasst werden. Die Additivbeimischung erfolgt dabei mit großer Genauigkeit.
Das Nachfüllen des flüssigen Additivs 10 in den Zusatzbehälter 9 erfolgt über den Einfüllstutzen 13. Nachdem der Zusatzbehälter 9 befüllt worden ist, wird der Einfüllstutzen 13 mit der Abdeckkappe 13 verschlossen, so dass der Innenraum des Zusatzbehälters 9 vor Verunreinigungen z.B. durch Staub und Wasser geschützt ist. Während des Betriebes der Brennkraftmaschine 1 sorgt das druckgesteuerte Belüftungsventil 12 dafür, dass auch bei einer größeren Menge von entnommenem Additiv 10 ein Unterdruck im Zusatzbehälter 9 vermieden und damit ein erhöhtes Ausdampfen des Additivs 10 verhindert werden kann.

## Patentansprüche

1. Kraftfahrzeug mit einer Brennkraftmaschine 1 mit Direkteinspritzung des Kraftstoffs und einer steuerbaren Additivzuführungsvorrichtung (2), wobei die Additivzuführungsvorrichtung (2) an eine zu den Zylindern (6) der Brennkraftmaschine (1) führende Luftzuführungsvorrichtung angeschlossen ist und von einer Steuervorrichtung in Abhängigkeit von dem jeweiligen Betriebszustand der Brennkraftmaschine (1) gesteuert ist.

2. Kraftfahrzeug nach Anspruch 1, bei dem die Additivzuführungsvorrichtung (2) von der Steuervorrichtung in Abhängigkeit von der Kraftstoff-Einspritzmenge gesteuert ist.

3. Kraftfahrzeug nach Anspruch 2, bei dem die Steuervorrichtung ihrerseits mittels eines elektronischen Motorsteuergeräts (17) (Motorelektronik) in Abhängigkeit von den Einspritz-Kennfelddaten gesteuert ist.

4. Kraftfahrzeug nach einem der Ansprüche 1 bis 3, bei dem die Additivzuführungsvorrichtung (2) mindestens einen auf dem Drop On Demand-Prinzip beruhenden gesteuerten Aktor (3) und eine dem Aktor (3) vorgeschaltete Förderpumpe aufweist.

5. Kraftfahrzeug nach einem der Ansprüche 1 bis 4, bei dem die Luftzuführungsvorrichtung für jeden Zylinder (6) der Brennkraffmaschine (1) ein Luftansaugrohr (4) aufweist, an das eine steuerbare Additivzuführungsvorrichtung (2) angeschlossen ist.

6. Kraftfahrzeug nach Anspruch 4 oder 5, bei dem jeder Aktor (3) mehrere einzeln ansteuerbare Düsenöffnungen aufweist.

7. Kraftfahrzeug nach einem der Ansprüche 1 bis 6, wobei die Brennkraftmaschine (1) ein Dieselmotor ist.
